# EUROPEAN PATENT SPECIFICATION

(11) **EP 0 740 798 B1**
(45) Date of publication and mention of the grant of the patent: **09.06.1999**
(21) Application number: 95905201.0
(22) Date of filing: 11.01.1995
(51) Int. Cl.: G01S 5/14, G01S 5/02

(54) **METHOD AND APPARATUS FOR POSITIONING CONSTRUCTION MACHINERY**
VERFAHREN UND GERÄT ZUR POSITIONIERUNG VON BAUMASCHINEN
PROCEDE ET APPAREIL DE POSITIONNEMENT DE MACHINES DE CONSTRUCTION

(30) Priority: 14.01.1994 GB 9400660; 26.10.1994 GB 9421607
(43) Date of publication of application: 06.11.1996
(73) Proprietor: BICC Public Limited Company, London W1X 5FH (GB)
(72) Inventor: WELTMAN, Austin, Stroud Gloucestershire GL6 6LY (GB)
(74) Representative: Poole, Michael John
(86) International application number: GB9500054
(87) International publication number: WO9519576

(56) References cited:
- WO-A-90/00718
- WO-A-92/08105
- DE-C- 4 133 392

## Description

This invention relates to a method of positioning construction machinery on the site of civil engineering or construction works (including offshore construction works), and more especially (though not exclusively) positioning rigs for the installation or formation of piles or other foundation works. It includes piling rigs and other construction machines equipped with the means required for the operation of the method.

In current practice, such machinery is positioned for operation by sighting with standard surveying instruments with reference to pegs or other markers laid out on the site before work commences. This established technique is well able to provide the required positioning accuracy, but it is liable to require skilled surveyors on site for only occasional activity, expensive delays are liable to arise when markers are accidentally knocked over or displaced (not a rare event on sites where heavy construction machinery is moving about) and even more expensive mistakes may arise if the markers are misinterpreted - for instance some surveyors will locate markers on the centre-line of a row of piles while others prefer to align them with a face of the piles - or if accidental displacement goes unnoticed.

In the meantime, navigational systems based on the use of satellites and in particular the Navstar Global Positioning System or GPS have been developed to the point at which their precision can achieve about ±5 mm, except for short periods when the position of the system satellites is unfavourable. However, it is difficult and not always practicable to operate a GPS system with its antenna at ground level on a construction site, where the presence of large metallic bodies (such as the construction machinery itself and in some cases the metal frames of adjoining buildings) may attenuate the satellite signals to the point at which they cannot be detected, or worse may deflect them and give systematic errors in the GPS measurement. Deep foundation construction equipment (such as pile rigs and diaphragm wall rigs) and other like machines are normally tall enough for reliable readings to be taken with a GPS antenna at the top of the machine, and DE4133392C proposes a method of positioning a similar machine having an upstanding mast comprising providing a satellite navigation system receiver having an antenna located at the top of the said mast; but this only substitutes the problem of relating the position of the antenna to that of the working part of the machine at ground level, which may vary by up to a metre or so for instance as the machine follows the imperfect contour of the site surface, deflects in the wind, and/or vibrates.

In accordance with the present invention, a method of positioning on a work site a construction machine having an upstanding mast comprising providing a satellite navigation system receiver having an antenna located at the top of the mast is *characterised by*
(a) locating the said antenna on an axis of the mast passing through a point (herein considered the centre of operation of the machine) at ground level which it is desired to bring to predetermined locations;
(b) providing means for determining the displacement of the axis of the mast from a pre-set position;
(c) obtaining output readings from the said navigation system receiver when the said displacement is less than a predetermined limit and distinguishing these said output readings from any other output readings that may be obtained when the said displacement is not less than the said predetermined limit; and
(d) positioning the machine in response to these said output readings.

In most cases the upstanding mast will be an intrinsic part of the machine, though a minor extension may be needed for positioning the antenna accurately on the axis.

The navigation system is preferably one of the high-precision GPS receivers, such as those marketed or under development by Trimble Navigation Inc having its principal place of business at 645 Mary Avenue, Sunnyvale CA 94068, USA and a subsidiary Trimble Navigation (Europe) Ltd at Osborn Way, Hook, Hampshire (herein together called Trimble). More especially, we recommend receivers which operate using the L1 and L2 P-code and carrier when available and using L1 CA code and cross-correlation of the encrypted Y-code when the L1 and L2 signals are scrambled. At present we prefer to use receivers of Trimble's "4000" series with automatic initialisation on the fly, and most especially model 4000SSE. WO93/05588 is thought to describe some features of such receivers.

The receiver may be provided with any appropriate conventional interpretation software, and in particular preferably with software for generating an output representing displacement from a target position entered manually or from a CAD file representing the design of the works to be executed. It may be desirable, if the movements of the mast are appreciable within the normal sampling period of the receiver (usually 1 or 2 seconds) to modify the software to sample at variable intervals when the mast is found to be sufficiently close to vertical.

Various kinds of tiltmeter (also called an inclinometer or clinometer) are available and can be used to determine displacements of the mast from the vertical. The requirements are for a response time of a fraction of a second or better and an accuracy of the order of 1 in 2500 or 40 seconds of arc (to support an accuracy of ±10 mm when the mast is 25 m high). At present we prefer tiltmeters based on self-levelling of fluids with appropriate viscosity to damp oscillations and more especially "electronic" tiltmeters in which movement of the self-levelling fluid affects the capacitance between plates of a capacitor, so that no solid moving parts are needed. Good results have been obtained with the tiltmeters sold by Monitran Ltd of 33 Hazlemere Road, Penn, Buckinghamshire, GB under the designation *AccuStar Electronic Clinometer.*

If the mast cannot be set stably vertical to the required tolerance and random movements of the mast do not provide an adequately short sampling period, means may be provided to introduce oscillatory movements (around one or two axes close to ground level) to ensure that the mast will be frequently vertical.

There is no necessity to obtain any output readings from the navigation system receiver when the mast is not vertical within the chosen tolerance, but it is convenient to do so provided that such readings are distinguished (for example by displaying them at reduced intensity or in a different colour from output signals obtained when it is vertical within the chosen tolerance) and are not relied on for positioning the machinery for operation.

The predetermined limit below which the displacement of the mast from vertical must be before output readings are used may be a constant predetermined angle. We prefer, however, that the limit is reduced as the machine approaches its target position. The limit might be a continually changing function; for instance it might be tan⁻¹(r/5h), where r is the most recently indicated distance from target and h the height of the mast (or a step function approximating it more or less closely), so that the error due to deviation of the mast from vertical would be limited to half an order of magnitude less than the current displacement of the machine from its target position. We find it more practical, however, that the limit changes in a small number of large steps and the display of the output changes correspondingly, so that positioning comprises a short sequence of adjustments of increasing precision. The number and size of the steps can be chosen to suit the conditions of a particular site, if desired.

The machine may be positioned in response to the output signals by a human driver, or in suitable cases the output signals may be input into a computer control system to allow the machine to seek its instructed position automatically. Especially in the latter case, final adjustment may be made by moving the mast with respect to the base of the machinery, rather than by moving the base of the machinery along the ground.

The invention will be further described, by way of example, with reference to the accompanying drawings in which:
Figure 1 is a diagrammatic view of a piling rig equipped with apparatus in accordance with the invention, and
Figures 2-7 show one way in which output measurements may be presented to a human driver as a succession of "screens" in a computer display in his cab.

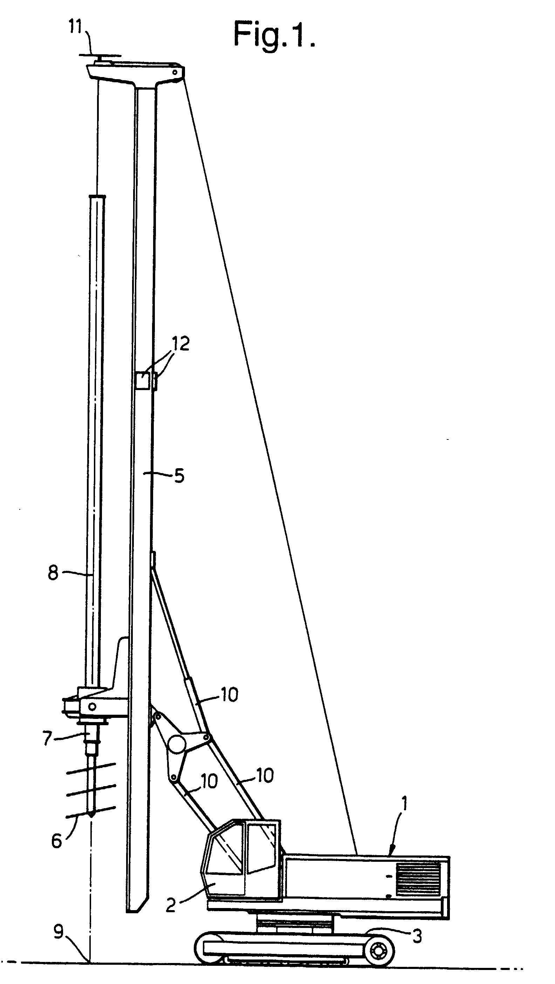

For purpose of illustration, the rig shown in Figure 1 is an auger piling rig for making one kind of cast-in-situ concrete foundation pile. The rig comprises a body 1 (including a driver's cab 2) rotatably mounted on a tracked base 3, which can be driven relatively precisely in a forward and rearward direction and can be steered, with rather less precision, by differentially driving its two tracks in the usual way.

On the front of the body is mounted a mast 5 supporting an auger 6 with appropriate drive gear 7, the rotation axis 8 of which defines the axis of the mast; the intersection 9 of this axis with the ground determines the centre of operation of the machine, where the auger will enter the ground and the pile will be formed. The problem is to locate the point 9 on the ground with sufficient accuracy, notwithstanding that the surface on which the rig stands may not be horizontal to the required accuracy, the hydraulic mechanism 10 holding the mast upright may not be set at the optimum angle, the wind may cause the mast to deflect and/or oscillate significantly and in some cases (mostly when the mast is already out of vertical for one of the other reasons) the mast may bend.

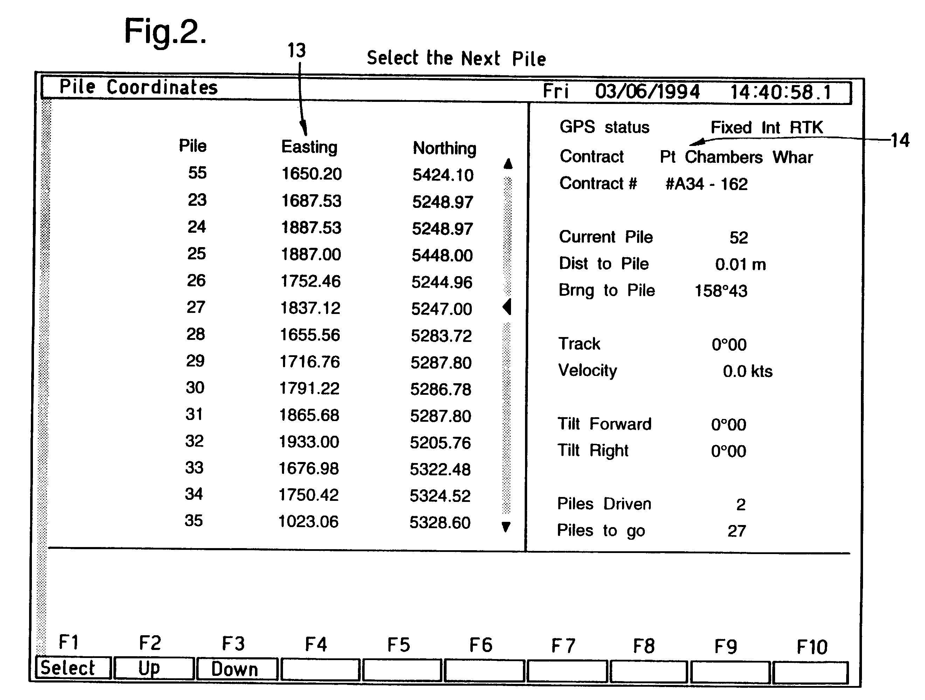

In accordance with the invention, the rig is provided with a GPS receiver and the antenna 11 of that receiver is located at the top of the mast 5, while at least the output display (Figures 2-7) is in the cab 2. A pair of electronic tiltmeters 12 (say of AccuStar electronic clinometers) is also fitted to the mast 5 and provides signals representing the displacement of the axis 8 from a truly vertical position in mutually perpendicular directions - preferably on the pitch and roll axes relative to the body of the machine. (At some stages of operation, this signal will also be displayed to the driver to assist adjusting the mast to a vertical position). A vector signal (using this expression in a broad sense to include, for example, a pair of error signals with + or - signs) is preferable as giving an immediate indication of corrective action to be taken for vertical setting of the mast.

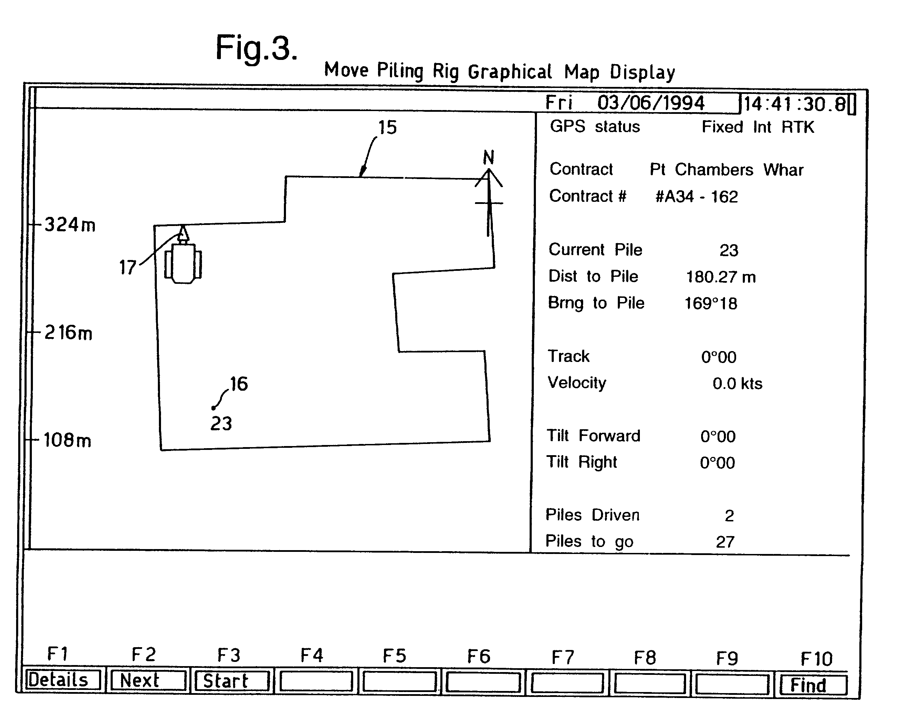

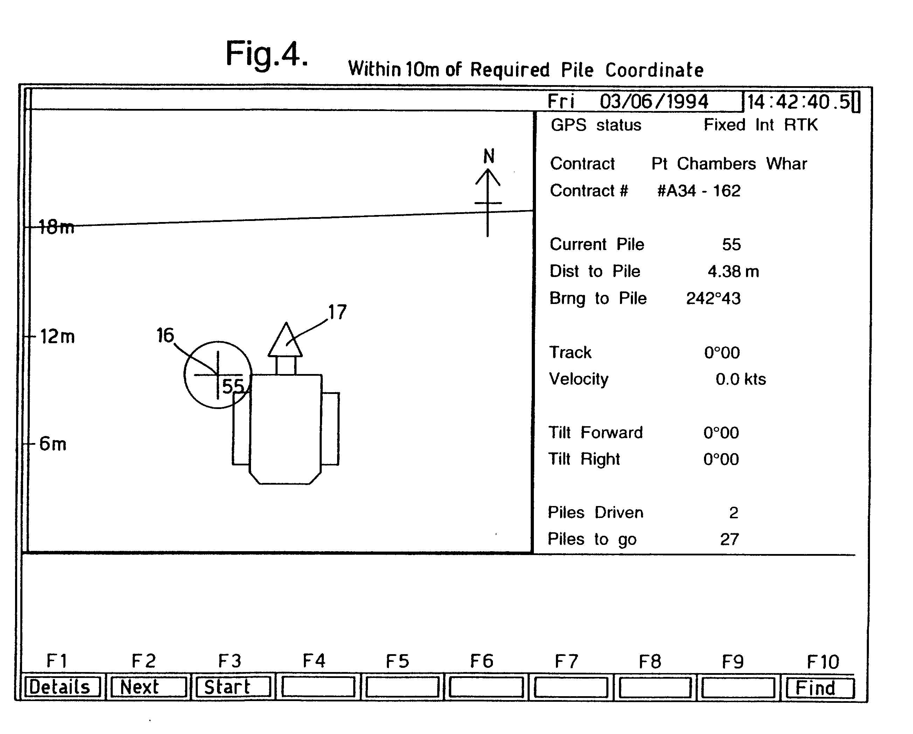

In the particular system illustrated by Figures 2-7, the driver's display initially shows (Figure 2) a listing 13 of the piles to be installed, with their intended location co-ordinates (Eastings and Northings, for instance in accordance with the United Kingdom Ordnance Survey's National Grid) which has previously been downloaded, say from a floppy disk produced by the design office computer. Contract and status information 14 may also be displayed. The operator selects a pile to be installed first, say by highlighting it in the list and pressing a function key or an *enter* key, and the display changes to show (Figure 3) a site plan 15 with the intended position of the selected pile (the *target* position) 16 and the position of the piling rig as indicated by the GPS system (the indicated position) 17: at this stage it does not matter if the mast is out of vertical and the indicated position of the rig consequently inaccurate. The operator drives the rig towards the target position, and will have no difficulty in coming within a few metres of it; if desired, the track of the rig across the site can be displayed as a "snail trail" on the display. When the distance between the target position and the indicated position is less than 10 m (say), the display changes scale (as seen in Figure 4) to facilitate the next step of adjusting the position to within 2 m (say) by driving the rig backwards or forwards, steering if necessary, and rotating the rig around its own rotation axis to make sideways adjustments within the range that the dimensions of the rig allow.

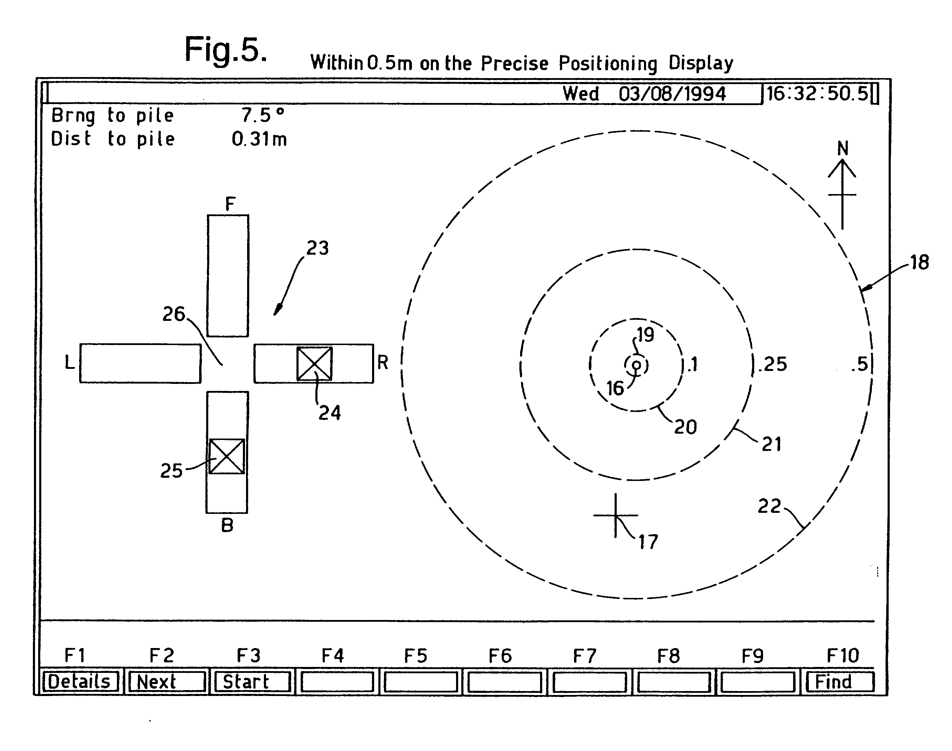

At this stage the display changes again, to the form shown in Figure 5 comprising a bullseye display 18 showing the target position 16 with concentric circles 19-22 around it, along with the indicated position 17, and a tilt display 23 displaying the outputs of the tiltmeters as left-right and forward-back tilt indications 24, 25 respectively on a "cross-hair" diagram; the scale of each of these parts of the display will change progressively as the target position is approached. At this stage, the outer circle of the bullseye display corresponds to 2 m on the ground and the scale of the tilt display 23 is such that the central space 26 between the fixed rectangles corresponds to a tilt range of ±15' of arc. When the difference between the indicated position and the target position falls below 1 m, the scale of the bullseye display changes so that the outer circle represents 1 m, for greater precision of positioning; on a colour display, it may also change colour to give a conspicuous indication of the change. When the difference between the indicated position and the target position falls below 0.5 m for the first time, the scale of the display (and its colour, if desired) changes again so that the outer circle now represents 0.5 m, and at the same time the software imposes an angular tolerance on the tilt equal to ±15'; usually this tolerance will not be met, in which case the bullseye display is dimmed (on a monochrome screen) or set to grey (on a colour screen) to indicate that the mast is not sufficiently vertical for the indicated position to be accurate, and the operator next adjusts the mast using the standard equipment of the rig until the two tilt indications are brought within the central space 26 of the crosshair display or (if the mast is swaying) are oscillating across it. In the latter case, the GPS output signal is suppressed except when the tilt is within this tolerance, and in any case the display brightens (on a monochrome screen) or becomes coloured to indicate that the bullseye display is now accurate enough to be useful. The driver adjusts position accordingly, pausing to re-adjust the mast if dimming (or loss of colour) indicates that it is necessary. When (with the mast vertical within the ±15' angular tolerance) the distance between the target position and the indicated position falls below 0.25 m, the angular tolerance is reduced to 6' and the crosshair display changes scale so that the central space 26 now represents 6' of arc. Adjustment continues as before to this new accuracy, and when the difference between the target position and the indicated position falls below 0.1 m, a similar and final change occurs so that the angular tolerance is 0'30" of arc and the scale of the crosshair display corresponds to it; the bullseye continues to dim or lose colour, as the case may be, if the mast is not vertical within the tolerance set for the time being and the operator continues to respond to this, when necessary, by adjusting the mast. (The example figures in this paragraph are appropriate for a good quality site; on an uneven site, angular tolerances may need to be set significantly sooner).

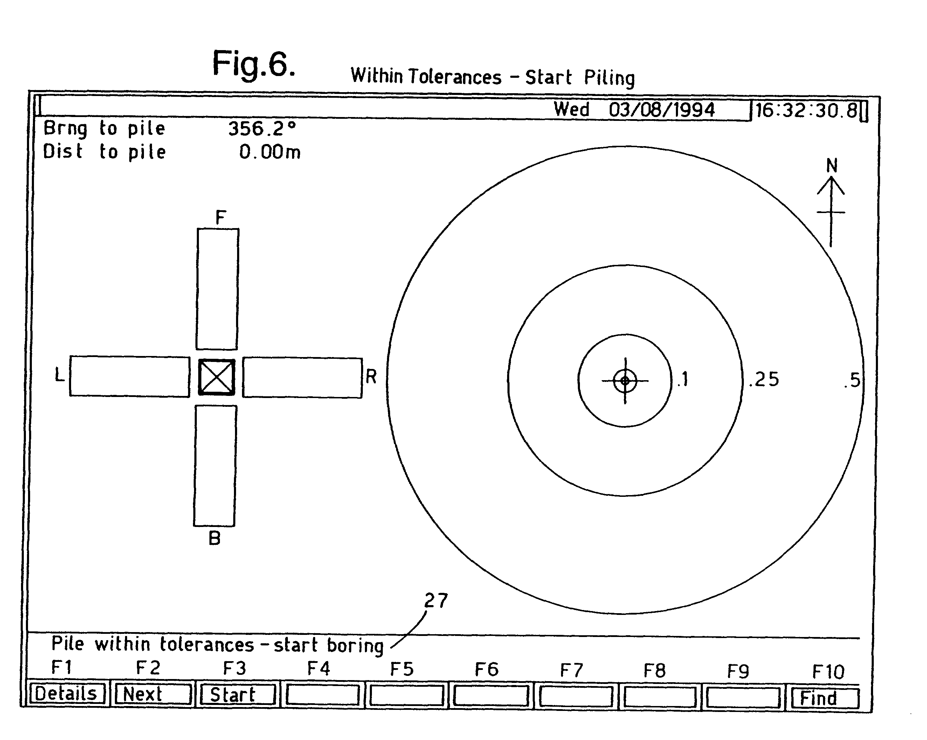

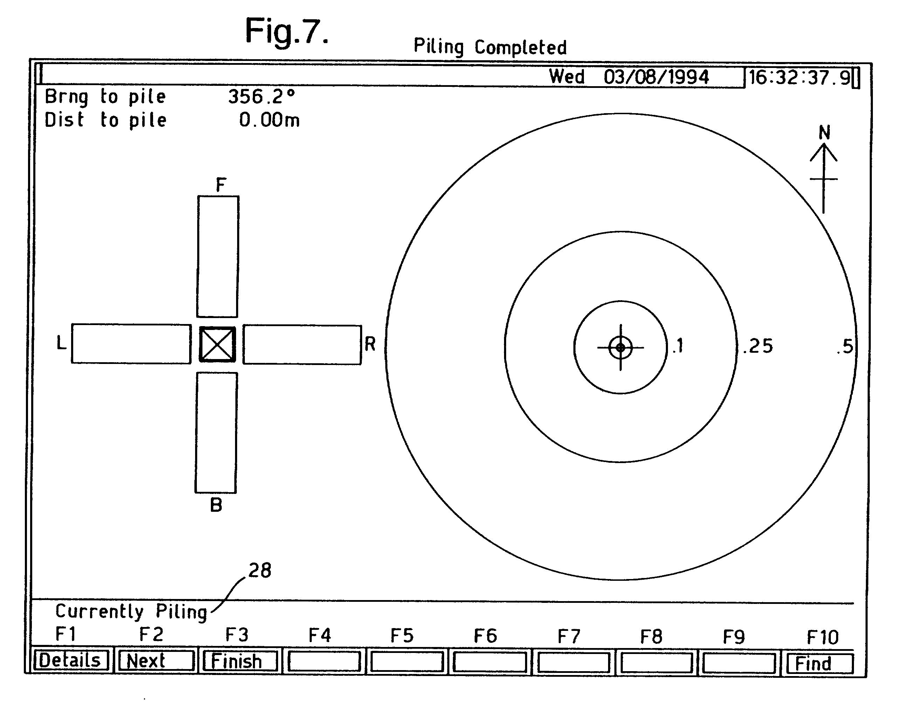

When, with the maximum scale and lowest tolerances, the distance between the target position and the indicated position remains below 10 mm for a sufficient time to indicate that the rig is stationary (say 1-2 seconds, or 1024 ms may be convenient to some software), a *READY* message 27 (Figure 6) is displayed, which the operator acknowledges with a function key, and pile installation can begin. The display may change again (Figure 7) to display a *PILING IN PROGRESS* message 28 while the GPS system continues to record position (which may change slightly while the pile is being installed). Appropriate instrumentation may be added to allow the depth achieved to be displayed as well, if desired. Further operation of a function key signals completion of piling and results in the recording of the final position measurement (in addition to the position when installation started, and final depth if instrumented), and returns the display to the form of Figure 2 (but with the completed pile deleted from the list 13), ready for the selection of the next pile to be installed.

In a modification of the procedure described, the software is adjusted so that the inclinometer measuring tilt in the fore-and-aft direction of the rig gives a "correct" signal when the mast is in fact tilted backwards by 8°, the reading from the other inclinometer being unaltered. Combining this angle with the known dimensions of the rig, its orientation provided by an additional gyroscopic system and the level of the antenna obtained by the GPS system allows the software by using routine trigonometric calculations to display the position of the axis of the mast at ground level (or at the design level of the top of the pile, if different), which is not now (in either case) the same as at the height of the antenna. By orienting the rig in the required direction and otherwise proceeding as described above, this enables a pile to be installed in the required position and at a raking angle of 8° forward from the rig.

## Claims

1. A method of positioning on a work site a construction machine (1) having an upstanding mast (5) comprising providing a satellite navigation system receiver having an antenna (11) located at the top of the mast characterised by
(a) locating the said antenna (11) on an axis (8) of the mast passing through a centre of operation (9) of the machine at ground level;
(b) providing means (12) for determining the displacement of the axis of the mast from a pre-set position;
(c) obtaining output readings from the said navigation system when the said displacement is less than a predetermined limit and distinguishing these said output readings from any other output readings that may be obtained when the said displacement is not less than the said predetermined limit; and
(d) positioning the machine (1) in response to these said output readings.

2. A method as claimed in claim 1 in which the said receiver is a GPS receiver.

3. A method as claimed in claim 2 in which the GPS receiver is of the kind which operate using the L1 and L2 P-code and carrier when available and using L1 CA code and cross-correlation of the encrypted Y-code when the L1 and L2 signals are scrambled.

4. A method as claimed in any one of claims 1-3 in which the said receiver is provided with software for the determination and display of distance from an entered target position.

5. A method as claimed in claim 4 in which the said limit is reduced as the machine approaches its target position.

6. A method as claimed in claim 5 in which the said limit is reduced in steps.

7. A method in accordance with any one of claims 4-6 in which the said distance from target position is supplied to control apparatus enabling the machine to seek its target position automatically.

8. A method as claimed in any one of claims 1-7 in which the said means (12) for determining the displacement of the mast from its pre-set position is a tiltmeter based on self-levelling of a fluid with sufficient viscosity to damp oscillations.

9. A method as claimed in any one of claims 1-7 in which the said means (12) for determining the displacement of the mast from its pre-set position is an electronic tiltmeter

10. A method as claimed in any one of claims 1-9 in which no output readings are obtained from the said navigation system receiver except when the mast (5) is vertical within the required tolerance.

11. A construction machine (1) having an upstanding mast (5) and equipped, for the purpose of positioning it on a work site, with a satellite navigation system receiver having an antenna (11) located at the top of the mast (5) *characterised in that*
(a) the said antenna (11) is on an axis (8) of the mast passing through a centre of operation (9) of the machine at ground level; *and in that*
(b) the machine also comprises:
(i) means (12) for determining the displacement of the mast (5) from a pre-set position;
(ii) means for obtaining output readings from the said navigation system when the said displacement is less than a predetermined limit and distinguishing these said output readings from any other output readings that may be obtained when the said displacement is not less than the said predetermined limit; and
(iii) means for positioning the machine (1) in response to these said output readings.

12. A construction machine as claimed in claim 11 in which the said receiver is a GPS receiver.

13. A construction machine as claimed in claim 12 in which the GPS receiver is of the kind which operate using the L1 and L2 P-code and carrier when available and using L1 CA code and cross-correlation of the encrypted Y-code when the L1 and L2 signals are scrambled.

14. A construction machine as claimed in any one of claims 11-13 in which the said receiver is provided with software for the determination and display of distance from an entered target position.

15. A construction machine as claimed in any one of claims 11-14 in which the said limit is reduced as the machine approaches its target position.

16. A construction machine as claimed in claim 15 in which the said limit is reduced in steps.

17. A construction machine in accordance with any one of claims 14-16 in which the said distance from target position is supplied to control apparatus enabling the machine to seek its target position automatically.

18. A construction machine in accordance with any one of claims 11-17, being a piling rig.

19. A construction machine in accordance with any one of claims 11-17, being a diaphragm wall rig.

## Patentansprüche

1. Verfahren zum auf einer Baustelle erfolgenden Positionieren einer Baumaschine (1) mit einem hochstehenden Mast (5) mit dem Schritt zum Bereitstellen eines Empfängers eines Satellitennavigationssystems mit einer an der Spitze des Masts angeordneten Antenne (11), gekennzeichnet durch die folgenden Schritte:
(a) Anordnen der Antenne (11) auf einer Achse (8) des Masts, die eine Arbeitsmitte (9) der Maschine auf Bodengleiche durchläuft;
(b) Bereitstellen einer Einrichtung (12) zum Bestimmen der Versetzung der Achse des Masts von einer voreingestellten Position;
(c) Erhalten von Ausgangsanzeigewerten vom Navigationssystem, wenn die Versetzung kleiner als ein vorbestimmter Grenzwert ist, und Unterscheiden dieser Ausgangsanzeigewerte von allen anderen Ausgangsanzeigewerten, die erhalten werden können, wenn die Versetzung nicht kleiner als der vorbestimmte Grenzwert ist; und
(d) Positionieren der Maschine (1) als Reaktion auf diese Ausgangsanzeigewerte.

2. Verfahren nach Anspruch 1, wobei der Empfänger ein GPS-Empfänger ist.

3. Verfahren nach Anspruch 2, wobei der GPS-Empfänger von der Art ist, die unter Verwendung des P-Codes und Trägers L1 und L2, wenn sie verfügbar sind, und unter Verwendung eines CA-Codes L1 und einer Kreuzkorrelation des verschlüsselten Y-Codes, wenn die Signale L1 und L2 verschlüsselt sind, arbeitet.

4. Verfahren nach einem der Ansprüche 1 bis 3, wobei der Empfänger mit Software zur Bestimmung und Anzeige einer Entfernung von einer eingegebenen Sollposition versehen ist.

5. Verfahren nach Anspruch 4, wobei der Grenzwert verringert wird, wenn sich die Maschine ihrer Sollposition nähert.

6. Verfahren nach Anspruch 5, wobei der Grenzwert schrittweise verringert wird.

7. Verfahren nach einem der Ansprüche 4 bis 6, wobei die Entfernung von der Sollposition zu einer Steuervorrichtung geführt wird, durch die die Maschine ihre Sollposition automatisch suchen kann.

8. Verfahren nach einem der Ansprüche 1 bis 7, wobei die Einrichtung (12) zum Bestimmen der Versetzung des Masts von seiner voreingestellten Position ein Neigungsmesser ist, der auf einer Selbstnivellierung eines Fluids mit ausreichender Viskosität zur Schwingungsdämpfung beruht.

9. Verfahren nach einem der Ansprüche 1 bis 7, wobei die Einrichtung (12) zum Bestimmen der Versetzung des Masts von seiner voreingestellten Position ein elektronischer Neigungsmesser ist.

10. Verfahren nach einem der Ansprüche 1 bis 9, wobei keine Ausgangsanzeigewerte vom Empfänger des Navigationssystems erhalten werden, außer wenn der Mast (5) innerhalb der erforderlichen Toleranz senkrecht ist.

11. Baumaschine (1), die einen hochstehenden Mast (5) hat und zu ihrem Positionieren auf einer Baustelle mit einem Empfänger eines Satellitennavigationssystems ausgerüstet ist, der eine an der Spitze des Masts (5) angeordnete Antenne (11) hat, dadurch gekennzeichnet, daß
(a) die Antenne (11) auf einer Achse (8) des Masts liegt, die eine Arbeitsmitte (9) der Maschine auf Bodengleiche durchläuft; und dadurch, daß
(b) die Maschine ferner aufweist:
(i) eine Einrichtung (12) zum Bestimmen der Versetzung des Masts (5) von einer voreingestellten Position;
(ii) eine Einrichtung zum Erhalten von Ausgangsanzeigewerten vom Navigationssystem, wenn die Versetzung kleiner als ein vorbestimmter Grenzwert ist, und Unterscheiden dieser Ausgangsanzeigewerte von allen anderen Ausgangsanzeigewerten, die erhalten werden können, wenn die Versetzung nicht kleiner als der vorbestimmte Grenzwert ist; und
(iii) eine Einrichtung zum Positionieren der Maschine (1) als Reaktion auf diese Ausgangsanzeigewerte.

12. Baumaschine nach Anspruch 11, wobei der Empfänger ein GPS-Empfänger ist.

13. Baumaschine nach Anspruch 12, wobei der GPS-Empfänger von der Art ist, die unter Verwendung des P-Codes und Trägers L1 und L2, wenn sie verfügbar sind, und unter Verwendung eines CA-Codes L1 und einer Kreuzkorrelation des verschlüsselten Y-Codes, wenn die Signale L1 und L2 verschlüsselt sind, arbeitet.

14. Baumaschine nach einem der Ansprüche 11 bis 13, wobei der Empfänger mit Software zur Bestimmung und Anzeige einer Entfernung von einer eingegebenen Sollposition versehen ist.

15. Baumaschine nach einem der Ansprüche 11 bis 14, wobei der Grenzwert verringert wird, wenn sich die Maschine ihrer Sollposition nähert.

16. Baumaschine nach Anspruch 15, wobei der Grenzwert schrittweise verringert wird.

17. Baumaschine nach einem der Ansprüche 14 bis 16, wobei die Entfernung von der Sollposition zu einer Steuervorrichtung geführt wird, durch die die Maschine ihre Sollposition automatisch suchen kann.

18. Baumaschine nach einem der Ansprüche 11 bis 17, bei der es sich um eine Pfahlramme handelt.

19. Baumaschine nach einem der Ansprüche 11 bis 17, bei der es sich um eine Schlitzwandramme handelt.

## Revendications

1. Procédé de positionnement sur chantier d'une machine (1) de chantier comportant un mât droit (5) comprenant un récepteur de système de navigation par satellite comportant une antenne (11) située au sommet du mât, et caractérisé par les étapes consistant à :
(a) fixer l'emplacement de ladite antenne (11) sur un axe (8) du mât passant par un centre d'opération (9) de la machine au niveau du sol;
(b) prévoir un moyen (12) permettant de déterminer le déplacement de l'axe du mât par rapport à une position pré-réglée;
(c) obtenir dudit système de navigation les valeurs relevées lorsque ledit déplacement est inférieur à une limite prédéterminée et distinguer lesdites valeurs relevées de toutes autres valeurs qui peuvent être obtenues lorsque ledit déplacement n'est pas inférieur à ladite limite prédéterminée; et
(d) positionner la machine (1) en réponse auxdites valeurs relevées.

2. Procédé selon la revendication 1 dans lequel ledit récepteur est un récepteur GPS (système de positionnement par satellite).

3. Procédé selon la revendication 2 dans lequel le récepteur GPS est du type qui fonctionne en utilisant le code P L1 et la porteuse L2 lorsqu'ils sont disponibles et en utilisant le code CA L1 et l'intercorrélation du code Y crypté lorsque les signaux L1 et L2 sont brouillés.

4. Procédé selon l'une quelconque des revendications 1 à 3, dans lequel ledit récepteur est pourvu d'un logiciel pour la détermination et l'affichage de la distance d'une position cible donnée.

5. Procédé selon la revendication 4 dans lequel ladite limite est réduite au cours de la progression de la machine vers sa position cible.

6. Procédé selon la revendication 5 dans lequel ladite limite est réduite par pas.

7. Procédé selon l'une quelconque des revendications 4 à 6, dans lequel ladite distance de la position cible est transmise à un appareil de commande permettant à la machine de chercher sa position cible automatiquement.

8. Procédé selon l'une quelconque des revendications 1 à 7 dans lequel ledit moyen (12) permettant de déterminer le déplacement du mât par rapport à sa position pré-réglée est un inclinomètre basé sur la mise à niveau spontanée d'un fluide ayant une viscosité suffisante pour amortir les oscillations.

9. Procédé selon l'une quelconque des revendications 1 à 7 dans lequel ledit moyen (12) permettant de déterminer le déplacement du mât par rapport à sa position pré-réglée est un inclinomètre électronique.

10. Procédé selon l'une quelconque des revendications 1 à 9 dans lequel aucune valeur relevée n'est obtenue dudit récepteur de système de navigation sauf lorsque le mât (5) est vertical, dans la tolérance requise.

11. Machine (1) de chantier comportant un mât (5) droit et équipée, dans le but d'être positionnée sur un chantier, d'un récepteur de système de navigation par satellite comportant une antenne (11) située au sommet du mât (5), *caractérisée en ce que :*
(a) ladite antenne (11) est sur un axe (8) du mât passant par un centre d'opération (9) de la machine au niveau du sol; *et en ce que*
(b) la machine comprend également :
(i) un moyen (12) permettant de déterminer le déplacement de l'axe du mât (5) par rapport à une position pré-réglée;
(ii) un moyen permettant d'obtenir dudit système de navigation les valeurs relevées lorsque ledit déplacement est inférieur à une limite prédéterminée et de distinguer lesdites valeurs relevées de toutes autres valeurs qui peuvent être obtenues lorsque ledit déplacement n'est pas inférieur à ladite limite prédéterminée; et
(iii) un moyen permettant de positionner la machine (1) en réponse auxdites valeurs relevées.

12. Machine de chantier selon la revendication 11 dans laquelle ledit récepteur est un récepteur GPS.

13. Machine de chantier selon la revendication 12 dans laquelle le récepteur GPS est du type qui fonctionne en utilisant le code P L1 et la porteuse L2 lorsqu'ils sont disponibles et en utilisant le code CA L1 et l'intercorrélation du code Y crypté lorsque les signaux L1 et L2 sont brouillés.

14. Machine de chantier selon l'une quelconque des revendications 11 à 13 dans laquelle ledit récepteur est pourvu d'un logiciel pour la détermination et l'affichage de la distance d'une position cible donnée.

15. Machine de chantier selon l'une quelconque des revendications 11 à 14 dans laquelle ladite limite est réduite au cours de la progression de la machine vers sa position cible.

16. Machine de chantier selon la revendication 15 dans laquelle ladite limite est réduite par pas.

17. Machine de chantier selon l'une quelconque des revendications 14 à 16 dans laquelle ladite distance de la position cible est transmise à un appareil de commande permettant à la machine de chercher sa position cible automatiquement.

18. Machine de chantier selon l'une quelconque des revendications 11 à 17, cette machine étant un appareil de battage de pieux.

19. Machine de chantier selon l'une quelconque des revendications 11 à 17, cette machine étant une machine de pose de rideaux souterrains.
